(19) Europäisches Patentamt
European Patent Office
Office européen des brevets

(11) **EP 0 412 616 B1**

(12) **EUROPÄISCHE PATENTSCHRIFT**

(45) Veröffentlichungstag und Bekanntmachung des Hinweises auf die Patenterteilung:
**12.06.1996 Patentblatt 1996/24**

(51) Int Cl.[6]: **H04L 25/03**

(21) Anmeldenummer: **90202140.1**

(22) Anmeldetag: **06.08.1990**

(54) **Empfänger für zeitvariant verzerrte Datensignale**

Receiver for time-varying distorted data signals

Récepteur pour signaux de données distordus de façon temporellement variable

(84) Benannte Vertragsstaaten:
**DE ES FR GB IT SE**

(30) Priorität: **09.08.1989 DE 3926277**

(43) Veröffentlichungstag der Anmeldung:
**13.02.1991 Patentblatt 1991/07**

(73) Patentinhaber:
• **Philips Patentverwaltung GmbH**
**22335 Hamburg (DE)**
Benannte Vertragsstaaten:
**DE**
• **Philips Electronics N.V.**
**5621 BA Eindhoven (NL)**
Benannte Vertragsstaaten:
**ES FR GB IT SE**

(72) Erfinder: **Baier, Alfred, Dr.-Ing.**
**D-8501 Eckental (DE)**

(74) Vertreter: **Peuckert, Hermann, Dipl.-Ing. et al**
**Philips Patentverwaltung GmbH,**
**Röntgenstrasse 24**
**22335 Hamburg (DE)**

(56) Entgegenhaltungen:
• **SECOND IEE NATIONAL CONFERENCE ON TELECOMMNICATIONS, York, 2. - 5. April 1989, Seiten 61-66; L.B. LOPES: "Performance of Viterbi equalisers for the GSM system"**
• **ITG-FACHBERICHT 109 ZUR ITG-FA, STOCHASTISCHE MODELLE UND METHODEN IN DER INFORMATIONSTECHNIK, 12. - 14. April 1989, Seiten 363-368, Nürnberg, DE; A. BAIER: "Correlative and iterative channel estimation in adaptive Viterbi equalizers for TDMA mobile radio systems"**

**Beschreibung**

Die Erfindung betrifft einen Empfänger für sendeseitig aus mindestens einem Nutzsignal und mindestens einem Trainingssignal zusammengesetzte Datensignale mit einem Entzerrer zur Entzerrung der zeitvariant verzerrten Datensignale mittels eines aus dem Trainingssignal in einem Kanalschätzer gebildeten Kanalinformationssignals und mit einer Anordnung zur Kanalnachführung, die zur Erzeugung von Korrekturwerten aus dem empfangenen Nutzsignal und dem entzerrten Nutzsignals für das Kanalinformationssignal vorgesehen ist.

Bei digitalen Übertragungssystemen mit dispersiven Übertragungskanälen wird ein vom Sender gesendetes Signal, welches zu übertragende Informationen in Form von Datensymbolen beinhaltet, durch Laufzeitunterschiede und Phasenverschiebungen beim Durchlaufen eines Übertragungskanals verzerrt. Diese Verzerrungen bewirken, daß die im empfangenen Signal enthaltenen Datensymbole durch vorangegangene Datensymbole beeinflußt werden (Nachbarzeichenstörungen).

Dispersive Übertragungskanäle treten sowohl bei Funkübertragungssystemen als auch bei leitungsgebundener Übertragung auf. Laufzeitunterschiede und Phasenverschiebungen entstehen beispielsweise durch Reflexionen und bei Funkübertragungssystemen durch Mehrwegeausbreitung. Besonders bei Funkübertragungssystemen, bei denen Sende- bzw. Empfangsstationen ortsbeweglich sind, z.B. bei einem Mobilfunksystem, sind diese Verzerrungen zudem zeitvariant. Um den ursprünglichen Dateninhalt des Signals zurückzugewinnen ist es erforderlich, das empfangene Signal zu entzerren.

Besondere Probleme bereiten hierbei zeitvariante Verzerrungen, da die Kanalinformation, mit deren Hilfe der Entzerrer die Entzerrung vornimmt, den zeitlichen Änderungen des Übertragungskanals entsprechend nachgeführt werden muß.

Aus dem Aufsatz "Correlative and iterative channel estimation in adaptive Viterbi equalizers for TDMA mobile radio systems", Alfred Baier, ITG-Fachbericht 109 zur ITG-Fachtagung "Stochastische Modelle und Methoden in der Informationstechnik", Nürnberg, 12.-14. April 1989, Seite 363 bis 368, ist ein Entzerrer für ein mobiles Funksystem bekannt, bei dem der Entzerrer während der Entzerrung entsprechend nachgeführt wird.

Der Empfänger ist Teil eines digitalen Übertragungssystems für eine Vielzahl von Teilnehmern, bei dem zu übertragende Daten in einem Zeitmultiplex-VielfachzugriffsVerfahren übertragen werden. Die zu übertragenden Daten werden im folgenden als Nutzdaten bezeichnet. Außer den Nutzdaten werden als sogenanntes Trainingssignal noch weitere, dem Empfänger a priori bekannte Daten für eine Kanalschätzung innerhalb eines jeden Zeitschlitzes mit übertragen. Durch Basisbandumsetzung und anschließende Abtastung werden aus einem empfangenen Eingangssignal zugehörige Quadraturkomponenten I und Q gebildet und in einem Signal-RAM zwischengespeichert. Aus dem in jedem Zeitschlitzsignal vorhandenen Trainingssignal ermittelt ein Kanalschätzer eine Kanalimpulsantwort. Diese Kanalimpulsantwort wird in einem Koeffizienten-RAM zwischengespeichert und ist einem Viterbi-Entzerrer und einer Anordnung zur Kanalnachführung zugeführt. Das Prinzip der Viterbi-Entzerrung für durch Nachbarzeichenstörungen verzerrte Signale ist beispielsweise in dem Aufsatz von G.D. Forney: "Maximum-likelihood sequence estimation of digital sequences in the presence of intersymbol interference", IEEE Trans. Information Th., vol IT-18, pp. 383-378, May 1972, beschrieben.

Nachdem der Viterbi-Entzerrer die für einen Zeitschlitz berechnete Kanalimpulsantwort erhalten hat, werden die im Signal RAM zwischengespeicherten I- und Q-Komponenten (Abtastwerte) des empfangenen Signals schrittweise ausgelesen und vom Viterbi-Entzerrer entzerrt. Die Entzerrung ist dabei ein implizierter Bestandteil der im Viterbi-Entzerrer durchgeführten Maximum-Likelihood-Detektion der empfangenen Datenfolge. Der Viterbi-Entzerrer liefert an seinem Ausgang also direkt die dem Datensignal entsprechenden Datensymbole.

Sowohl die schrittweise ausgelesenen Abtastwerte des empfangenen Signals als auch die detektierten Datensymbole der Nutzdaten sind einer Anordnung zur Kanalnachführung zugeführt. Zu jedem Abtastwert bzw. wenn dies ausreichend ist jeweils immer erst nach mehreren Abtastwerten, ermittelt die Anordnung zur Kanalnachführung einen neuen Schätzwert für die Kanalimpulsantwort anhand eines in oben genannter Schrift näher beschriebenen Gradienten-Verfahrens. Die jeweils neu gebildeten Schätzwerte für die Kanalimpulsantwort werden über das Koeffizienten-RAM sowohl der Anordnung für die Kanalnachführung als auch dem Viterbi-Entzerrer zugeführt. Bei der Zuordnung der nachgeführten Kanalimpulsantwort zu dem im Entzerrer zu entzerrenden Abtastwert ist unter Umständen ein durch die Signalverarbeitung bedingter zeitlicher Versatz der Länge von mehreren Datensymbolen zu berücksichtigen. Auf diese Weise entsprechen die dem Viterbi-Entzerrer zugeführten Schätzwerte sehr gut den tatsächlichen Kanalimpulsantworten, so daß die Bitfehlerrate der vom Viterbi-Entzerrer ausgegebenen entzerrten Nutzdaten gering ist.

Bei sehr großen Relativgeschwindigkeiten zwischen Sender und Empfänger (z.B. 200 km/h beim Betrieb des Mobilfunkgerätes beispielsweise in einem Fahrzeug) kann dies trotzdem zu einer Verschlechterung der Bitfehlerrate führen.

Aufgabe der vorliegenden Erfindung ist es, bei einem Empfänger der eingangs genannten Art auch bei sehr großen Relativgeschwindigkeiten zwischen Sender und Empfänger die Bitfehlerrate im empfangenen Signal gering zu halten.

Diese Aufgabe wird dadurch gelöst, daß der Empfänger Mittel aufweist, die vorgesehen sind, dem der Anordnung zur Kanalnachführung zugeführten Nutzsignal zumindest einen Teil des Trainingssignals voranzustellen.

Die Erfindung bietet den Vorteil, daß die Bitfehlerrate unabhängig von der Position der detektierten Datensymbole ist. Auf diese Weise ist die Bitfehlerrate am Beginn einer Nutzdatenfolge genauso gering wie am Ende der detektierten Nutzdatenfolge.

Im folgenden wird die Erfindung anhand eines Ausführungsbeispiels näher beschrieben und erläutert.

Es zeigen:

Fig. 1 einen Zeitmultiplexrahmen und einen Zeitschlitz des Zeitmultiplexrahmens in schematischer Darstellung.

Fig. 2 eine schematische Schaltungsanordnung eines Empfängers.

Fig. 3 ein Bitfehlerratendiagramm.

Fig. 4 ein Diagramm zum Verlauf der Kanalimpulsantwort.

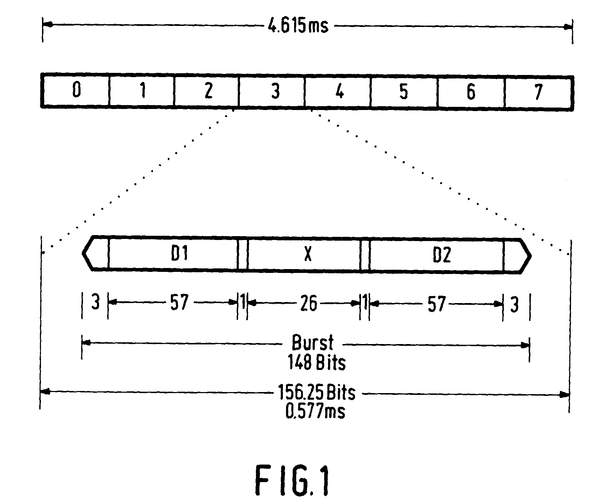

Als Ausführungsbeispiel wurde ein Empfänger für ein Mobilfunksystem gewählt, bei dem jeder Frequenzkanal eine Zeitschlitz-Vielfach-Zugriffs-Struktur mit acht Zeitschlitzen 0...7 aufweist (Fig. 1). Ein Zeitschlitz kann einen sogenannten "normal burst", einen "frequency correction burst", einen "synchronisation burst" oder einen "access burst" enthalten. In Fig. 1 ist im Zeitschlitz 3 ein "normal burst" dargestellt, wie er zur Übertragung von Nutzdatensymbolen verwendet wird. Die Nutzdatensymbole werden in zwei Nutzdatenteilfolgen D1 bzw. D2 in den Zeitschlitz eingebettet. In der Mitte des Zeitschlitzes ist von den Nutzdatenteilfolgen D1, D2 eine Trainingsdatenfolge T eingeschlossen.

Der Dateninhalt des Zeitschlitzes wird mittels einer Gaussian Minimum Shift Keying (GMSK) Technik moduliert. Hierdurch, und durch das Durchlaufen eines dispersiven Übertragungskanals, kommen am Empfänger Datensignale an, in denen die ursprünglichen Datensymbole nicht einzeln aufzulösen sind. Allenfalls lassen sich zeitlich abgrenzbare Bereiche angeben, in welchen den ursprünglich gesendeten Datensymbolen Datensignale bzw. den ursprünglich gesendeten Datensymbolen der Trainingsdaten Trainingssignale zuordenbar sind. Zur Detektierung der ursprüglich gesendeten Datensymbole müssen die Verzerrungen des dispersiven Übertragungskanals rückgängig gemacht werden.

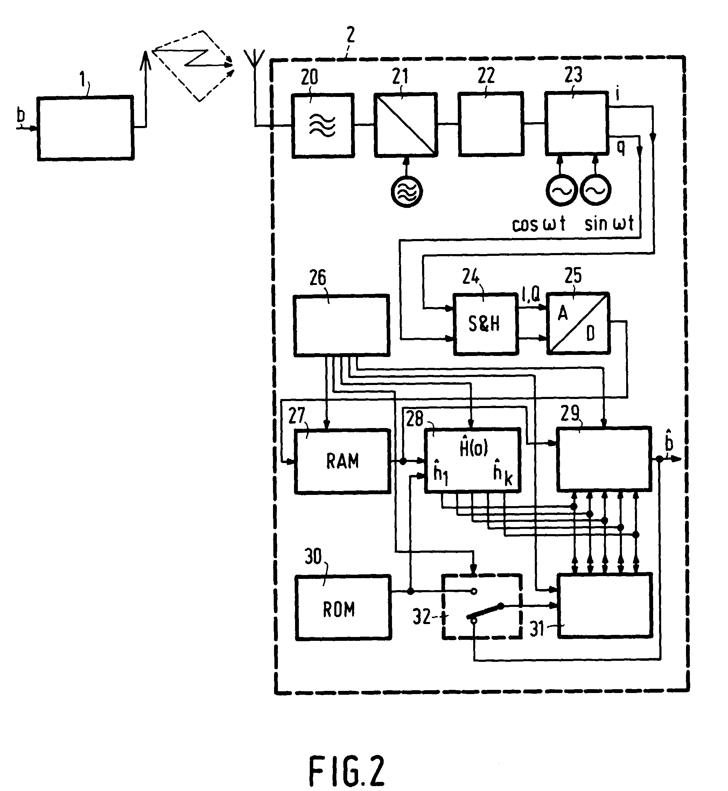

Einen hierfür geeigneten Empfänger zeigt Fig. 2. Ein trägerfrequentes Empfangssignal wird zunächst nach Durchlaufen einer Eingangsstufe 20, in welcher das Empfangssignal verstärkt und selektiert wird, nachdem es einen ZF-Mischer 21 und ZF-Verstärker 22 durchlaufen hat, mit Hilfe eines Quadraturmischers 23 ins Basisband umgesetzt. Die durch den Quadraturmischer 23 erzeugten Quadratursignale i und q werden mittels eines Sample and Hold Gliedes 24 abgetastet und durch einen A/D-Umsetzer 25 in digitale Werte umgesetzt. Hierdurch kann die weitere daran anschließende Signalverarbeitung digital erfolgen. Durch eine Synchronisationseinrichtung und Ablaufsteuerung 26 werden die digitalisierten I und Q-Abtastwerte jeweils für die Dauer des vom betrachteten Empfänger zu verarbeitenden Zeitschlitzes in einem ersten Schreib-Lese-Speicher (RAM) 27 abgespeichert. Die Zeitdauer bis zum Eintreffen des nächsten zu verarbeitenden Zeitschlitzes kann nun für die weitere Verarbeitung der im RAM 27 zur Verfügung stehenden Abtastwerte genutzt werden.

Die digitale Signalverarbeitung gliedert sich in die Entzerrung und Detektion, die zeitschlitzweise korrelative Kanalschätzung und die iterative Kanalnachführung. Zur Entzerrung und Detektion wird im Ausführungsbeispiel ein Viterbi-Entzerrer 29 verwendet, welcher unter Ausnützung der Kenntnis der momentanen Kanalcharakteristik die vom Sender ausgesandte digitale Nutzinformation im Empfänger aus den im RAM gespeicherten Abtastwerten der I und Q Komponenten zurückgewinnt.

Ein Kanalschätzer 28 wertet das in jedem Zeitschlitz enthaltene Trainingssignal aus. Die ursprünglich ausgesendeten Datensymbolfolgen der Trainingsdaten sind hierfür in jedem Empfänger in einem Festwertspeicher (ROM) 30 abgelegt. Die Trainingsdatenfolge ist so gewählt, daß sie eine impulsförmige Autokorrelationsfunktion aufweist. So kann der Kanalschätzer 28 die Position des Trainingssignals im Empfangssignal anhand allgemein bekannter Algorithmen leicht auffinden. Der Aufbau eines solchen Kanalschätzers für einen Viterbi-Entzerrer ist beispielsweise in dem Aufsatz "Bit Synchronization and timing sensitivity in adaptive Viterbi equalizers for narrowband TDMA digital mobile radio systems", A. Baier, G. Heinrich, U. Wellens, IEEE Vehicular Techn. Conf., Philadelphia, 15-17 June 1988, pp. 377 - 384, beschrieben.

Durch den dispersiven Übertragungskanal wird ein von einem Sender 1 ausgesendetes Signal r(t) mit am Empfänger verzögert eintreffenden Signalanteilen bereits vor diesem Signal ausgesendeter Signale $r(t-t_1)...$ $r(t-t_2)$ überlagert und dadurch verzerrt. Nach einer gewissen Zeit, die von der Charakteristik des Übertragungskanals abhängig ist, ist der Einfluß der am Empfänger verzögert eintreffenden Signalanteile nicht mehr von Bedeutung und braucht bei der Entzerrung nicht mehr berücksichtigt zu werden. Vorteilhafterweise kann die zu berücksichtigende Laufzeitverzögerung als Anzahl n der in dieser Zeitspanne ausgesendeten Datenelemente angegeben werden. Durch Korrelation des im Eingangssignal enthaltenen verzerrten Trainingssignals mit der im ROM 30 gespeicherten unverzerrten Trainingsdatenfolge ermittelt der Kanalschätzer 28 eine Kanalimpulsantwort H(0), die aus mehreren Parametern $h_1(0)...h_k(0)$ zusammengesetzt ist. Die Anzahl k der Parameter entspricht hierbei, vorausgesetzt, daß pro Bitintervall ein Abtastwert gebildet wird, der Anzahl n der bei der Entzerrung zu berücksichtigenden Datensymbole.

Bei mehreren Abtastwerten pro Bitintervall ist um k zu erhalten n mit der Anzahl der Abtastwerte pro Bitintervall zu multiplizieren. Diese geschätzte Kanalimpulsantwort $\hat{H}(0)$ wird dem Viterbi-Entzerrer 29 als Vektor von Eingangsparametern zugeführt.

Bei Zeitmultiplexsystemen mit Übertragungskanälen, deren Kanalcharakteristik sich sehr schnell, d.h. bereits innerhalb eines Zeitschlitzes, ändert, ist es jedoch weiterhin erforderlich, die Kanalimpulsantwort innerhalb der Zeitdauer des Zeitschlitzes entsprechend nachzuführen. Bis zum Eintreffen des nächsten Trainingssignals und damit der Möglichkeit, einen neuen Schätzwert für die Impulsantwort zu bilden, hat sich bei solchen Zeitmultiplexsystemen die tatsächliche Kanalimpulsantwort bereits erheblich geändert.

Hierzu wird im Ausführungsbeispiel eine Anordnung zur iterativen Kanalnachführung 31 eingesetzt, die ausgehend von dem im aktuellen Zeitschlitz ermittelten Schätzwert der Kanalimpulsantwort $H_0(0)$ anhand eines iterativen Nachführalgorithmus an jeder Stelle innerhalb des Zeitschlitzes diesen Schätzwert laufend den Änderungen der momentanen Kanalimpulsantwort $\hat{H}_i(0)$ anpaßt. Die im Ausführungsbeispiel der Erfindung vorgesehene Anordnung zur iterativen Kanalnachführung ist im eingangs genannten Aufsatz eingehend beschrieben.

Die vom Viterbi-Entzerrer detektierten Nutzdaten $\hat{b}$(i) werden als Eingangswerte eines Transversalfilters eingelesen, dessen Filterkoeffizienten zum Zeitpunkt i dem Impulsantwortkoeffizienten $h_k(i)$ entsprechen. Das komplexe Ausgangssignal $\hat{s}(i)$ dieses Filters wird mit den tatsächlichen im RAM gespeicherten Abtastwerten I(i) und Q(i) verglichen und es wird eine komplexere Fehlergröße

$$e(i) = I(i) + jQ(i) - \hat{s}(i)$$

gebildet. Aus dieser Fehlergröße e(i) wird ein Gradientenvektor berechnet, der anzeigt, in welche Richtung die Kanalimpulsantwort $\hat{H}_i(0)$ verändert werden muß, um den Fehler zu minimieren. Durch Addition eines diesen Gradientenvektors proportionalen Korrekturwertvektors zu der jeweils letzten geschätzten Kanalimpulsantwort $\hat{H}_i(0)$ wird auf diese Weise der neue Schätzwert $\hat{H}(i+1)$ für die Kanalimpulsantwort gebildet. Diese entspricht in zufriedenstellender Näherung der tatsächlichen Kanalimpulsantwort.

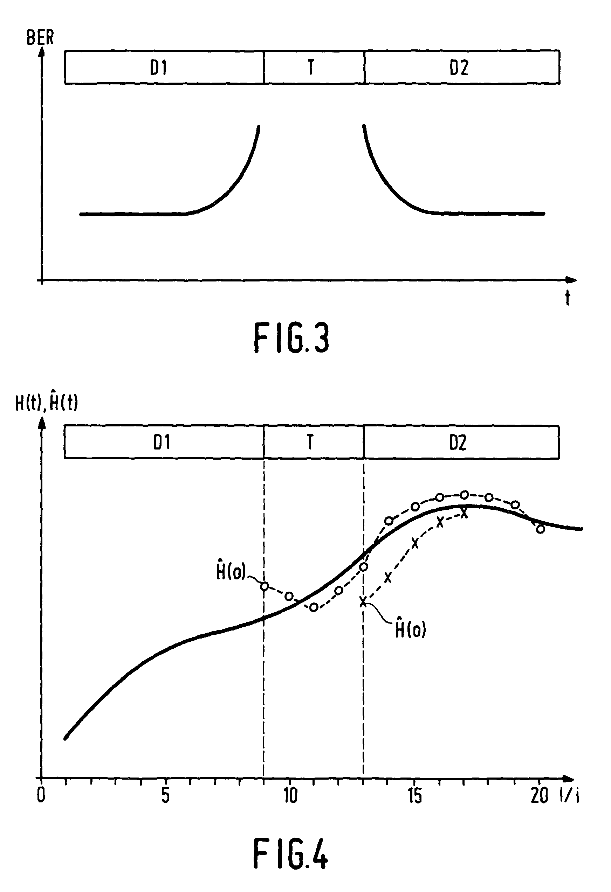

Fig. 3 zeigt eine Bitfehlerkurve, bei der die Bitfehler gemittelt über eine größere Anzahl von ausgewerteten Zeitschlitzen auf die Position der detektierten Datensymbole bezogen ist. In vertikaler Richtung ist eine Bitfehlerrate BER und in horizontaler Richtung eine Zeitachse t aufgetragen. In der oberen Hälfte des Diagramms ist ein zeitlich mit der Einteilung der Zeitachse übereinstimmender Zeitschlitz dargestellt. Deutlich ist die größere Bitfehlerrate am Beginn der Auswertung der Nutzteilsignale jeweils zu Beginn und Ende des Trainingssignals T des dargestellten Zeitschlitzes gegenüber dem Ende der Verarbeitung der Nutzdaten jeweils zu Beginn und Ende des dargestellten Zeitschlitzes zu sehen.

Die aus dem Trainingssignal ermittelte Anfangsschätzung $\hat{H}(0)$ vermag die tatsächliche, zu Beginn des Nutzdatensignals vorhandene Kanalimpulsantwort aufgrund der Zeitveränderlichkeit der Kanalimpulsantwort nicht exakt wiederzugeben. Im Ausführungsbeispiel der Erfindung wird daher nach der in einem ersten Verarbeitungsschritt vollzogenen Ermittlung des Schätzwertes H(0) der Kanalimpulsantwort durch Korrelation der im ROM gespeicherten Trainingsdatenfolge mit dem empfangenen Trainingssignal in einem zweiten Verarbeitungsschritt dieses Trainingssignal den Nutzdaten vorangestellt. In einem dritten Verarbeitungsschritt erfolgt dann die bereits beschriebene Entzerrung und Detektion der Nutzdaten und die damit verbundene Nachführung der Kanalimpulsantwort, jetzt allerdings mit der aus Trainingssignal und Nutzdatenfolge gebildeten Gesamtfolge. Die Steuerung der Reihenfolge dieser Verarbeitungsschritte wird durch eine zentrale Steuerschaltung 26 durchgeführt.

Während der Nachführung im Bereich des Trainingssignals wird der Anordnung zur Kanalnachführung nicht die vom Viterbi-Entzerrer gelieferte Folge der entzerrten Daten sondern die im Empfänger im ROM 30 gespeicherte Trainingsdatenfolge zugeführt. Dies ist in Fig. 2 symbolisch durch einen vor der zentralen Steuereinrichtung 26 gesteuerten Umschalter 32 dargestellt, der hierzu den Ausgang des ROM 30 mit dem Dateneingang der Anordnung zur iterativen Kanalnachführung 31 verbindet. Sobald der Nachführalgorithmus den Nutzdatenteil erreicht, werden der Anordnung zur Kanalnachführung die vom Viterbi-Entzerrer 29 gelieferten entzerrten und detektierten Nutzdatensymbole $\hat{b}$ zugeführt. Der Umschalter 32 steht dann wieder in der in der Fig. 2 eingezeichneten Stellung. Dies hat den Vorteil, daß während der Kanalnachführung innerhalb des Trainingssignals garantiert fehlerfreie Datensymbole in die iterative Kanalnachführung eingehen. Ein weiterer Vorteil besteht darin, daß der Entzerrer das Trainingssignal in diesem Fall nicht entzerren und detektieren muß. Der Entzerrer/Detektor 29, gesteuert durch die zentrale Steuerschaltung 26, überspringt diesen Teil des Empfangssignals. Dies ermöglicht eine Einsparung von Verarbeitungszeit und Stromaufnahme.

Im Ausführungsbeispiel ist das Trainingssignal in der Mitte zwischen zwei Nutzdatensignalen eingefügt. Die geschilderte Verarbeitung muß daher im Ausführungsbeispiel zweimal erfolgen. Zum einen wird zur Entzerrung der dem Trainingssignal nachfolgenden Nutzdaten D2, wie bereits beschrieben, das Trainingssignal den Nutzdaten vorangestellt und die iterative Kanalnachführung am Beginn des Trainingssignals begonnen. Für die Verarbeitung der ersten Datensignale D1, die der Trainingssequenz vorausgehen, wird das Trainingssignal dieser ersten Datensignale D1 nachgestellt und die daraus gebildete Gesamtfolge gespiegelt, so daß das gespiegelte Trainingssignal wieder zu Beginn des zu entzerrenden Gesamtsignals steht. Dieses gespiegelte Gesamtsignal wird ebenfalls wie beschrieben abgearbeitet, wobei durch die Spiegelung diesmal die iterative Kanalnachführung mit dem Ende des Trainingssignals beginnt und das Gesamtsignal quasi rückwärts abgearbeitet wird.

Durch eine nicht dargestellte weitere Verarbeitungsstufe, der die detektierten Datensignale D1 und D2 zugeführt sind, werden die Datensignale D1 und D2 wieder in der ursprünglichen Reihenfolge zusammengefügt.

Fig. 4 zeigt in einem Diagramm als ausgezogene Linie den Verlauf der tatsächlichen Kanalimpulsantwort $H_t(0)$ während eines Zeitschlitzes. Die jeweils ermittelten Schätzwerte $\hat{H}_i(0)$ der Kanalimpulsantwort sind als kleine Kreuze bzw. als kleine Kreise dargestellt. Diese Darstellung kann nur schematisch sein, da ja die Kanalimpulsantworten aus k einzelnen Parametern zusammengesetzt sind. Der besseren Übersicht wegen ist die Nachführung der Kanalimpulsantwort H(0) nur für das zweite Nutzdatenteilsignal D2 dargestellt. Als $\hat{H}(0)$ ist der durch den Kanalschätzer ermittelte Schätzwert der Kanalimpulsantwort des Übertragungskanals während des Trainingssignals aufgetragen. Es ist zu sehen, daß dieser Schätzwert H(0) ungefähr einem Mittelwert des Verlaufs der Kanalimpulsantwort während des Trainingssignals T entspricht. Würde man von diesem Schätzwert ausgehend (i = 13) die iterative Kanalnachführung starten, so würde sich in etwa der durch die eingezeichneten Kreuze gekennzeichnete Verlauf der nachgeführten Kanalimpulsantwort ergeben. Diese Kreuze nähern sich erst nach einer Mehrzahl von Nachführungen (i = 16) an den tatsächlichen Verlauf der Kanalimpulsantwort an. Wenn bereits zu Beginn des Trainingssignals (i = 9) mit dem Startwert $\hat{H}(0)$ begonnen wird, ergibt sich in etwa aus dem durch die kleinen Kreise dargestellten Schätzwertverlauf der Schätzwert für die Kanalimpulsantwort.

Deutlich zu sehen ist, daß durch diese Art der Verarbeitung die Differenz zwischen dem ermittelten Anfangsschätzwert für die Kanalimpulsantwort und der tatsächlichen Kanalimpulsantwort bis zum Ende der Abarbeitung des Trainingssignals durch die Anordnung zur iterativen Kanalnachführung verringert wird. Hierdurch ist zu Beginn der Verarbeitung der zweiten Nutzdatenteilfolge D2 (i = 13) die Abweichung von dem jeweiligen Schätzwert der Kanalimpulsantwort zur tatsächlichen Kanalimpulsantwort ungefähr genauso gering wie im weiteren Verlauf der Auswertung der Nutzdaten.

Je nach den zu erwartenden zeitlichen Änderungen der Kanalimpulsantwort ist es unter Umständen auch schon ausreichend, die iterative Kanalnachführung mit einem Teil (etwa der Hälfte oder dem letzten Drittel) des Trainingssignals auszuführen.

Für die Entzerrung und Detektierung, die Kanalschätzung und die iterative Kanalnachführung und die sich eventuell daran anschließende weitere digitale Signalverarbeitung werden üblicherweise Signalprozessoren verwendet. Die geschilderte Verarbeitung läßt sich auch bei einem Empfänger in dem ein solcher Signalprozessor verwendet wird leicht realisieren. Hierzu wird beispielsweise während der Ausführung eines Programmteils zur iterativen Kanalnachführung zuerst die im ROM gespeicherte Trainingsdatenfolge und wenn diese abgewickelt ist, dann die im RAM gespeicherten Abtastwerte dem Signalprozessor, beispielsweise durch Übergabe von Adressinformationen, zugeführt.

**Patentansprüche**

1. Empfänger (2) für sendeseitig aus mindestens einem Nutzsignal (D1, D2) und mindestens einem Trainingssignal (X) zusammengesetzte Datensignale (D1, D2, X) mit einem Entzerrer (29) zur Entzerrung der zeitvariant verzerrten Datensignale (D1, D2, X) mittels eines aus dem Trainingssignal (X) in einem Kanalschätzer (28) gebildeten Kanalinformationssignals ($h_1, .., h_k$) und mit einer Anordnung (31) zur Kanalnachführung, die zur Erzeugung von Korrekturwerten aus dem empfangenen Nutzsignal (D1, D2) und dem entzerrten Nutzsignals (b) für das Kanalinformationssignal ($h_1; .., h_k$) vorgesehen ist,
dadurch gekennzeichnet,
daß der Empfänger (2) Mittel (26, 32) aufweist, die vorgesehen sind, dem der Anordnung (31) zur Kanalnachführung zugeführten Nutzsignal (D1, D2, b) zumindest einen Teil des Trainingssignals (X, T) voranzustellen.

2. Empfänger nach Anspruch 1,
dadurch gekennzeichnet,
daß der Empfänger (2) einen Speicher (30) zur Speicherung einer Abbildung (T) des Trainingssignals aufweist und daß die Abbildung (T) des Trainingssignals zur Zuführung zeitlich vor dem entzerrten Nutzsignal (b) vorgesehen ist.

3. Empfänger nach einem der Ansprüche 1 oder 2,
dadurch gekennzeichnet,
daß zur Zuführung zeitlich vor dem empfangenen (D1, D2) Nutzsignal zumindest ein Teil des empfangenen Trainingssignals (X) und zur Zuführung zeitlich vor dem entzerrten Nutzsignal (b) zumindest ein Teil eines entzerrten Trainingssignals (T) vorgesehen ist.

4. Empfänger nach einem der Ansprüche 1 bis 3,
dadurch gekennzeichnet,
daß das gespeicherte Trainingssignal (T) zur Zuführung an die Anordnung zur Kanalnachführung (31) vorgesehen ist.

**5.** Empfänger nach einem der Ansprüche 1 bis 4,
<u>dadurch gekennzeichnet,</u>
daß der Empfänger (2) Mittel (26) aufweist, die dazu vorgesehen sind, daß der Entzerrer (29) während der Bearbeitung der Abbildung (T) des Trainingssignals in der Anordnung zur Kanalnachführung (31) keine Entzerrung des Trainingssignal vornimmt.

**6.** Empfänger nach einem der Ansprüche 1 bis 5,
<u>dadurch gekennzeichnet,</u>
daß die Datensignale (D1, D2, X) nach einem Zeitmultiplex-Vielfachzugriffsverfahren übertragen werden.

**7.** Empfänger nach einem der Ansprüche 1 bis 6,
<u>dadurch gekennzeichnet,</u>
daß der Empfänger eine Steuereinrichtung (26) aufweist, die zum Zuführen der im Speicher (30) gespeicherten Trainingsdatenfolge (T) während der Nachführung im Bereich des Trainingssignals (T) an die Anordnung zur Kanalnachführung (31) vorgesehen ist.

**8.** Empfänger nach einem der Ansprüche 1 bis 7,
<u>dadurch gekennzeichnet,</u>
daß die Steuereinrichtung (26) dazu vorgesehen sind, der Anordnung zur Kanalnachführung (31) die vom Entzerrer (29) gelieferten entzerrten und detektierten Nutzdatensymbole (b) zuzuführen, sobald der Nachführalgorithmus den Nutzdatenteil erreicht.

**9.** Empfänger nach einem der Ansprüche 1 bis 9,
<u>dadurch gekennzeichnet,</u>
daß der Empfänger (2) eine von der Steuereinrichtung (26) gesteuerte Umschalteinrichtung (32) aufweist, die zur Verbindung des Ausgangs der Speichereinrichtung (30) mit dem Dateneingang der Anordnung zur Kanalnachführung (31) vorgesehen ist.

**10.** Ortsfeste Funkstation für ein Mobilfunkübertragungssystem mit einem Empfänger (2) nach einem der Ansprüche 1 bis 9.

**11.** Mobilfunkgerät für ein Mobilfunkübertragungssystem mit einem Empfänger (2) nach einem der Ansprüche 1 bis 9.

**12.** Übertragungssystem (1, 2), insbesondere Mobilfunkübertragungssystem, mit mindestens einem Empfänger (2) nach einem der Ansprüche 1 bis 9.

**Claims**

**1.** Receiver (2) for data signals (D1, D2, X) formed at the transmitting end by at least one useful signal (D1, D2) and at least one training signal (X), comprising an equalizer (29) for equalizing the time-varying distorted data signals (D1, D2, X) with the aid of a channel information signal ($h_1, .., h_k$) formed in a channel estimator (28) from the training signal (X), and comprising a channel tracking arrangement (31) which arrangement generates from the received useful signal (D1, D2) and the equalized useful signal (b) correction values for the channel information signal ($h_1, ..., h_k$), characterized in that the receiver (2) comprises means (26, 32) for putting at least part of the training signal (X, T) in front of the useful signal (D1, D2, b) that is supplied to the channel tracking arrangement (31).

**2.** Receiver as claimed in Claim 1, characterized in that the receiver (2) comprises a memory (30) for storing a mapping (T) of the training signal and in that the mapping (T) of the training signal is supplied prior to the equalized useful signal (b).

**3.** Receiver as claimed in one of the Claims 1 or 2, characterized in that at least part of the received training signal (X) is supplied prior to the received useful signal (D1, D2) and at least part of an equalized training signal (T) is supplied prior to the equalized useful signal (b).

**4.** Receiver as claimed in one of the Claims 1 to 3, characterized in that the stored training signal (T) is supplied to the channel tracking arrangement (31).

**5.** Receiver as claimed in one of the Claims 1 to 4, characterized in that the receiver ( 2) comprises means ( 26) which are provided so that the equalizer (29) does not equalize the training signal while the mapping (T) of the training signal is being processed in the channel tracking arrangement (31).

**6.** Receiver as claimed in one of the Claims 1 to 5, characterized in that the data signals (D1, D2, X) are transmitted in accordance with a time-division multiple access method.

**7.** Receiver as claimed in one of the Claims 1 to 6, characterized in that the receiver comprises a controller (26) which supplies the training data sequence (T) stored in the memory (30) to the channel tracking arrangement (31) while the training signal (T) is being tracked.

**8.** Receiver as claimed in one of the Claims 1 to 7, characterized in that, once the tracking algorithm has reached the useful data portion, the controller (26) is provided so that the channel tracking arrangement (31) is supplied with the detected useful data symbols (b) equalized by the equalizer (29).

9. Receiver as claimed in one of the Claims 1 to 8, characterized in that the receiver (2) comprises a changeover device (32) controlled by the controller (26) which device is arranged for connecting the output of the memory(30) to the data input of the channel tracking arrangement (31).

10. Base radio station for a mobile radio transmission system, comprising a receiver (2) as claimed in one of the Claims 1 to 9.

11. Mobile radio unit for a mobile radio transmission system, comprising a receiver (2) as claimed in one of the Claims 1 to 9.

12. Transmission system (1, 2), more specifically, mobile radio transmission system, comprising at least one receiver (2) as claimed in one of the Claims 1 to 9.

**Revendications**

1. Récepteur (2) pour des signaux de données (D1, D2, X), côté émetteur, composés d'au moins un signal utile (D1, D2) et d'au moins un signal de formation (X) avec un redresseur (29) pour le redressement de signaux de données distordus (D1, D2, X) variant dans le temps à l'aide d'un signal d'information de canal formé du signal de formation (X) dans un évaluateur de canal (28) ($h_1 ... h_k$) et avec un dispositif (31) pour le pilotage du canal qui est prévu pour la production de valeurs de correction à partir du signal utile reçu (D1, D2) et du signal utile redressé (b) pour le signal d'information de canal ($h_1 ... h_k$), caractérisé en ce que le récepteur (2) présente des moyens (26, 32) qui sont prévus pour placer au moins une partie du signal de formation (X, T) avant le signal utile (D1, D2, b) amené au dispositif (31) pour le pilotage du canal.

2. Récepteur selon la revendication 1, caractérisé en ce que le récepteur (2) présente une mémoire (30) pour sauver une représentation (T) du signal de formation et en ce que la représentation (T) du signal de formation à amener est prévue temporellement avant le signal utile redressé (b).

3. Récepteur selon l'une des revendications 1 ou 2, caractérisé en ce qu'au moins une partie du signal de formation reçu (X) est prévue pour être amenée avant le signal utile reçu (D1, D2) et au moins une partie d'un signal de formation redressé (T) est prévue temporellement pour être amenée avant le signal utile redressé (b).

4. Récepteur selon l'une des revendications 1 à 3, caractérisé en ce que le signal de formation (T) sauvé est prévu pour l'alimentation au dispositif de pilotage du canal (31).

5. Récepteur selon l'une des revendications 1 à 4, caractérisé en ce que le récepteur (2) présente des moyens (26) qui sont prévus pour que le redresseur (29) ne procède pas au redressement du signal de formation pendant le traitement de la représentation (T) du signal de formation dans le dispositif de pilotage du canal (31).

6. Récepteur selon l'une des revendications 1 à 5, caractérisé en ce que les signaux de données (D1, D2, X) sont transmis après un procédé d'accès multiples à multiplexage temporel.

7. Récepteur selon l'une des revendications 1 à 6, caractérisé en ce que le récepteur présente un dispositif de commande (26) qui est prévu pour l'alimentation de la séquence de données de formation (T) sauvée dans la mémoire (30) pendant le pilotage dans la région du signal de formation (T) sur le dispositif de pilotage du canal (31).

8. Récepteur selon l'une des revendications 1 à 7, caractérisé en ce que le dispositif de commande (26) est prévu pour amener au dispositif de pilotage du canal (31) les symboles de données utiles (b) détectés et redressés fournis par le redresseur (29) dès que l'algorithme de pilotage atteint la partie des données utiles.

9. Récepteur selon l'une des revendications 1 à 8, caractérisé en ce que le récepteur (2) présente un dispositif de commutation (32) commandé par le dispositif de commande (26) qui est prévu pour la liaison de la sortie du dispositif à mémoire (30) avec l'entrée de données du dispositif de pilotage du canal (31).

10. Station radio fixe pour un système de radiotéléphonie mobile avec un récepteur (2), selon l'une des revendications 1 à 9.

11. Radiotéléphone mobile pour un système de transmission par radiotéléphonie mobile avec un récepteur (2), selon l'une des revendications 1 à 9.

12. Système de transmission (1, 2), en particulier système de transmission par radiotéléphonie mobile, avec au moins un récepteur (2), selon l'une des revendications 1 à 9.

FIG.1

FIG.2

BER

| D1 | T | D2 |
|----|---|----|

t

FIG.3

H(t), Ĥ(t)

| D1 | T | D2 |
|----|---|----|

Ĥ(o)

Ĥ(o)

| 0 | 5 | 10 | 15 | 20 l/i |

FIG.4